# EUROPÄISCHE PATENTSCHRIFT

(11) **EP 0 831 343 B1**
(45) Veröffentlichungstag und Bekanntmachung des Hinweises auf die Patenterteilung: **15.06.2005**
(21) Anmeldenummer: 97113567.8
(22) Anmeldetag: 05.08.1997
(51) Int. Cl.: G02B 6/12, G02B 6/13

(54) **Optischer Wellenleiter und Verfahren zu seiner Herstellung**
Optical waveguide and process for its manufacture
Guide d'ondes optique et son procédé de fabrication

(30) Priorität: 19.09.1996 DE 19638495
(43) Veröffentlichungstag der Anmeldung: 25.03.1998
(73) Patentinhaber: Infineon Technologies AG, 81669 München (DE)
(72) Erfinder: Schneider, Hartmut, Dr., 81927 München (DE)
(74) Vertreter: Müller, Wolfram Hubertus, Dipl.-Phys.

(56) Entgegenhaltungen:
- EP-A- 0 285 351
- EP-A- 0 444 582
- WO-A-89/08273
- US-A- 3 902 879
- US-A- 5 525 190

## Beschreibung

Die Erfindung betrifft einen optischen Wellenleiter nach dem Oberbegriff des Anspruchs 1.

Ein derartiger Wellenleiter ist aus der Europäischen Offenlegungsschrift EP 0 285 351 A1 bekannt. Bei diesem Wellenleiter handelt es sich um einen integrierten Wellenleiter, der durch "Eindiffundieren" von Titan in LiNbO₃-Material hergestellt wird. Im Kurvenbereich sind neben dem Diffusionswellenleiter Gräben vorgesehen, die mit Luft oder einem festen Material gefüllt sind. Das Füllmaterial der Gräben weist eine geringere Brechzahl als das LiNbO₃-Material auf.

Der Erfindung liegt die Aufgabe zugrunde, einen Wellenleiter anzugeben, bei dem bei fest vorgegebenen Brechzahlen für Kern und Mantel die Brechzahldifferenz zwischen Kern und Mantel vergrößert ist.

Diese Aufgabe wird durch die im kennzeichnenden Teil des Patentanspruchs 1 angegebenen Merkmale gelöst.

Planare Wellenleiter kommen in der Mikrooptik vielfach zum Einsatz. Bei herkömmlichen planaren Wellenleitern beträgt die Brechzahldifferenz zwischen Kern und Mantel größenordnungsmäßig etwa 1 %. Die numerische Apertur dieser herkömmlichen planaren Wellenleiter ist daher meist sehr klein und beträgt höchstens 0,30, wodurch der Koppelwirkungsgrad zwischen einem solchen planaren Wellenleiter und einer Laserdiode in der Regel erheblich begrenzt ist. In Kurven verbieten sich bei diesen planaren Wellenleitern zudem scharfe Krümmungen, da andernfalls erheblich Abstrahlverluste in Kauf genommen werden müssen.

Bei dem erfindungsgemäßen planaren Wellenleiter werden diese Einschränkungen aufgehoben. Ein besonderer Vorteil des erfindungsgemäßen planaren Wellenleiters ist die erhebliche Erhöhung der numerischen Apertur durch die Absenkung der Brechzahl des Mantels. Bei Anordnung mehrerer Hohlräume an einem axialen Ende des Kerns des planaren Wellenleiters kann die Lichtakzeptanz aus einer Leuchtdiode erheblich gesteigert werden, wodurch linsenlose Koppler zum optischen Aneinanderkoppeln einer Leucht- oder Laserdiode und eines Wellenleiters realisierbar sind. Auch Srahlumsetzer sind realisierbar. Die außenseitige Anordnung einer oder mehrerer Hohlräume in einer Krümmung des planaren Wellenleiters reduziert dessen Abstrahlverluste erheblich. Speziell gilt auch beim planaren Wellenleiter, daß er sich als Schalter realisieren oder für spektral photometrische Analysen verwenden läßt.

Obgleich ein erfindungsgemäßer Hohlraum an den Kern des Wellenleiters angrenzen kann, sind bevorzugte Ausgestaltungen des erfindungsgemäßen Wellenleiters so ausgebildet, daß der Hohlraum in einem zur Achse radialen Abstand vom Kern angeordnet ist (Anspruch 2).

Ein erfindungsgemäßer Hohlraum kann sich durchaus über die ganze axiale Länge des Kerns des Wellenleiters erstrecken, doch sind bevorzugte Ausgestaltungen des erfindungsgemäßen Wellenleiters so ausgebildet, daß sich der Hohlraum längs der Achse nur über einen Bruchteil der axialen Länge des Kerns erstreckt (Anspruch 3).

Insbesondere bei Wellenleitern mit geradlinig verlaufender Achse kann es bevorzugter- und vorteilhafterweise so eingerichtet sein, daß über dem die Achse umgebenden Umfang des Kerns zwei oder mehrere Hohlräume verteilt sind (Anspruch 4).

Ein erfindungsgemäßer Wellenleiter mit stark erhöhter numerischer Apertur ist vorteilhafterweise so ausgebildet, daß zumindest ein Hohlraum an einem axialen Ende des Kerns angeordnet ist (Anspruch 5). Über dieses axiale Ende des Kerns ist die optische Strahlung einzukoppeln. Dabei ist es insbesondere günstig, wenn an dem axialen Ende des Kerns zwei oder mehrere über den die Achse umgebenden Umfang des Kerns verteilt sind. Mit Hilfe dieser Maßnahmen kann die Lichtakzeptanz aus einer Leuchtdiode beim Wellenleiter erheblich gesteigert werden.

Zur Reduzierung der Abstrahlverluste bei einem gekrümmten Wellenleiter, bei welchem der Kern zumindest abschnittsweise längs einer gekrümmten Achse verläuft, ist es besonders vorteilhaft, wenn ein Hohlraum nur auf einer von einem Krümmungsmittelpunkt der gekrümmten Achse abgekehrten Seite der Achse im Mantel angeordnet ist (Anspruch 6).

Ein Hohlraum kann evakuiert sein, ist aber bevorzugterweise mit einem Fluid, beispielsweise einem Gas gefüllt. Gemäß einer bevorzugten Ausgestaltung des erfindungsgemäßen Wellenleiters ist zumindest ein Hohlraum mit einem optisch aktiven Medium, beispielsweise einem optisch nichtlinearen Fluid gefüllt oder füllbar (Anspruch 7). In diesem Fall läßt sich mit dem erfindungsgemäßen Wellenleiter vorteilhafterweise ein optische Schalter realisieren.

Der erfindungsgemäße Wellenleiter läßt sich vorteilhafterweise auch für spektralphotometrische Analysen verwenden. Dazu ist bei dem erfindungsgemäßen Wellenleiter zumindest ein Hohlraum mit einem spektralphotometrisch zu analysierenden Fluid füllbar (Anspruch 8), das vorzugsweise absorbiert. Der lange optische Weg im evaneszenten Feld des erfindungsgemäßen Wellenleiters erlaubt hohe Nachweisempfindlichkeit.

Ein hermetischer Abschluß eine Hohlraums des erfindungsgemäßen Wellenleiters (Anspruch 9) verhindert eine Verschlechterung durch Alterungseffekte.

Bevorzugte und vorteilhafte Ausgestaltungen des erfindungsgemäßen planaren Wellenleiters gehen aus den Ansprüchen 9 bis 16 hervor.

Ein bevorzugtes Verfahren zur Herstellung eines erfindungsgemäßen planaren Wellenleiters geht generell aus dem Anspruch 17 hervor. Die in Anspruch 18 angegebene Ausgestaltung dieses erfindungsgemäßen Verfahrens hat den Vorteil, daß mehrere um den Kern herum verteilte Hohlräume erzeugt werden können. Weitere bevorzugte und vorteilhafte Ausgestaltungen des erfindungsgemäßen Verfahrens gehen aus den Ansprüchen 19 bis 21 hervor.

Die Erfindung wird in der nachfolgenden Beschreibung anhand der Figuren beispielhaft näher erläutert. Es zeigen:
- Figur 1: einen zur Achse senkrechten Querschnitt längs der Schnittlinie I-I in Figur 2 durch ein Ausführungsbeispiels eines erfindungsgemäßen planaren Wellenleiters, das zwei Hohlräume aufweist,
- Figur 2: einen axialen Längsschnitt entlang der Schnittlinie II-II in Figur 1 durch das Ausführungsbeispiel nach Figur 1,
- Figur 3: einen axialen Längsschnitt durch ein anderes Ausführungsbeispiel eines erfindungsgemäßen planaren Wellenleiters, das sich vom Beispiel nach Figur 1 und 2 dadurch unterscheidet, daß die Achse eine Krümmung aufweist und nur ein Hohlraum vorhanden ist,
- Figur 4: einen zur Achse senkrechten Querschnitt durch ein weiteres Ausführungsbeispiel eines erfindungsgemäßen planaren Wellenleiters, das sich von den Beispielen nach den Figuren 1 bis 3 dadurch unterscheidet, daß vier Hohlräume vorhanden sind,
- Figur 5: einen Querschnitt durch eine planare Wellenleiterstruktur, bei der drei parallele Kerne von einem gemeinsamen Mantel umgeben sind und die als Ausgangsstufe zur Herstellung mehrerer erfindungsgemäßer planarer Wellenleiter dient,
- Figur 6: die Struktur nach Figur 5 in der gleichen Darstellung nach Erzeugung von Aussparungen in einer Aussparungsschicht und
- Figur 7: in der gleichen Darstellung wie in den Figuren 5 und 6 die Endstufe der Wellenleiterstruktur, die aus drei erfindungsgemäßen planaren Wellenleitern besteht, deren jeder dem Wellenleiter nach den Figuren 1 und 2 entspricht, und
- Figur 8: in der gleichen Darstellung wie in der Figur 6 eine Wellenleiterstruktur, die aus drei erfindungsgemäßen planaren Wellenleitern besteht, deren jeder dem Wellenleiter nach Figur 4 entspricht.

Die Figuren sind schematisch und nicht maßstäblich.

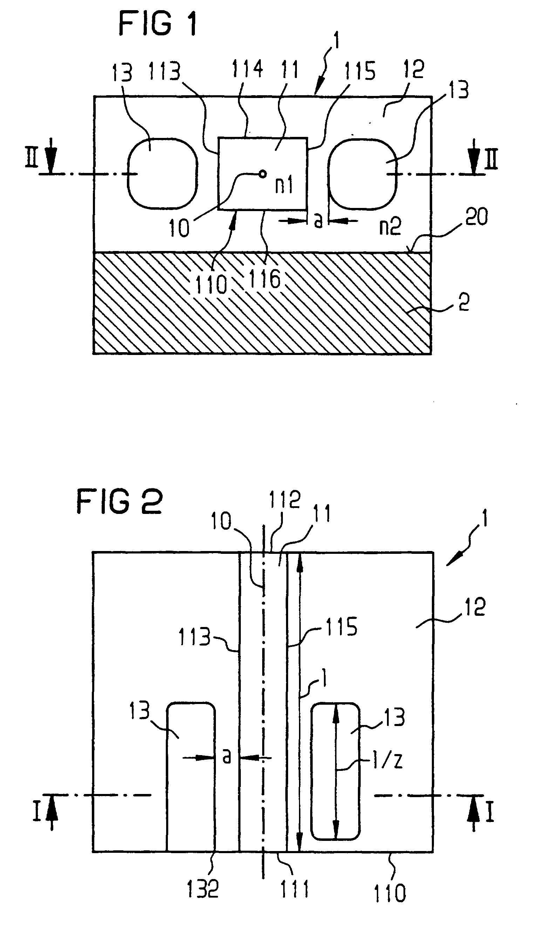

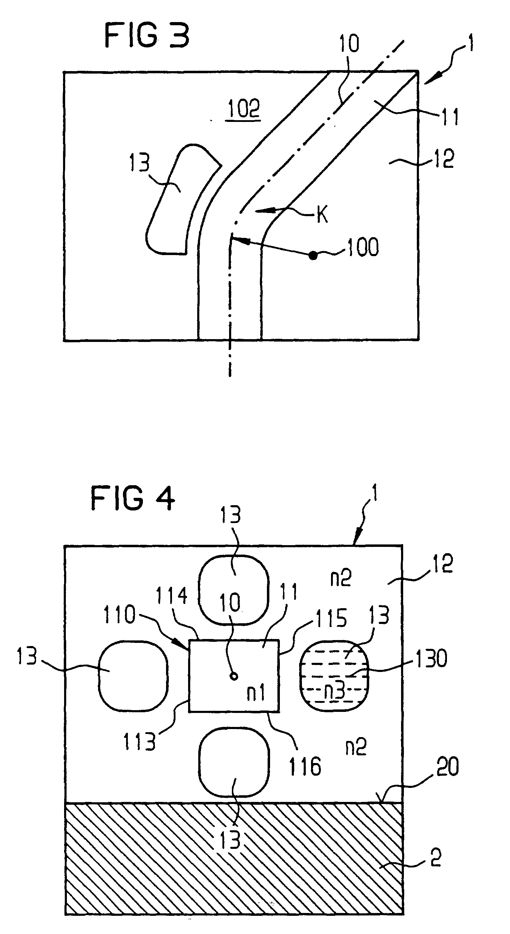

Bei dem in den Figuren 1 und 2 dargestellten Ausführungsbeispiel ist der generell mit 1 bezeichnete planare Wellenleiter auf der Oberfläche 20 eines Substrats 2 aufgebracht und besteht aus dem auf die Oberfläche 20 des Substrats 2 aufgebrachten und aus festem Material bestehenden Mantel 12 und aus dem vollständig vom Mantel 12 umgebenen und Kern 11.

Das Material des Kerns 11 weist eine Brechzahl n1 und das Material des Mantels 12 eine Brechzahl n2 auf, die kleiner als die Brechzahl n1 des Kerns 11 ist, so daß zwischen Kern 11 und Mantel 12 eine Brechzahldifferenz Δn = n1-n2 > 0 besteht.

Der Kern 11 erstreckt sich längs einer Achse 10, entlang der eine nicht dargestellte optische Strahlung im Kern 11 geführt wird und die in der Figur 1 senkrecht zur Zeichenebene steht. Der zur Achse 10 senkrechte Querschnitt des Kerns 11 ist im wesentlichen rechteckförmig, d.h. der die Achse 10 umgebende Umfang 110 des Kerns 11 beschreibt ein Rechteck.

Erfindungsgemäß ist im festen Material des Mantels 12 zumindest ein Hohlraum 13 ausgebildet. Beim Beispiel nach den Figuren 1 und 2 sind im Mantel 12 speziell zwei Hohlräume 13 ausgebildet, die gegenüber zueinander entgegengesetzten Rechteckseiten 113 und 115 des Umfangs 110 des Kerns 11 angeordnet sind.

Jeder der beiden Hohlräume 13 ist in einem Abstand a vom Kern 11 angeordnet, der für beide Hohlräume 13 gleich oder verschieden sein kann. Ein Hohlraum 13 könnte auch unmittelbar an den Kern 11 grenzen, so daß der Abstand a dieses Hohlraums 13 gleich null betrüge.

Bei dem Beispiel nach den Figuren 1 und 2 erstreckt sich jeder der beiden Hohlräume 13 längs der Achse 10 nicht über die durch stirnseitige bzw. axiale Enden 111 und 112 begrenzte ganze axiale Länge l des Kerns 11, obgleich dies möglich wäre, sondern nur über einen Bruchteil l/z dieser axialen Länge l (siehe Figur 2), wobei z eine beliebige Zahl größer 1 ist. z kann für verschiedene Hohlräume verschieden oder gleich sein. Beim Beispiel nach den Figuren 1 und 2 sind beide Hohlräume 13 axial gleich lang gewählt, so daß z > 1 für beide Hohlräume 13 gleich ist.

Die Lage der im Vergleich zur Länge l des Kerns 11 kürzeren Hohlräume 13 in bezug auf den Kern 11 kann prinzipiell beliebig gewählt werden.

Soll der Wellenleiter 1 an einem der beiden axialen Enden 111 und 112 des Kerns 11, beispielsweise am Ende 111 für die über dieses Ende 111 in den Kern 11 einzukoppelnde und im Kern 11 zu führende optische Strahlung eine möglichst hohe Apertur haben, wird zumindest ein Hohlraum 13 an diesem axialen Ende 111 angeordnet. Günstig ist es in diesem Fall, wenn zwei oder mehrere Hohlräume 13 an dem axialen Ende 111 angeordnet sind, so, wie es aus der Figur 2 zu entnehmen ist. Analoges gilt für das andere Ende 112.

Verlaufen die Achse 10 und damit der Kern 11 nicht wie im Fall des Ausführungsbeispiels nach den Figuren 1 und 2 geradlinig, sondern weisen sie wie beim Ausführungsbeispiel nach Figur 3 eine Krümmung K auf, so ist es zur Verringerung von Abstrahlverlusten im Bereich der Krümmung K günstig, einen Hohlraum 13 im Bereich der Krümmung K anzuordnen, wobei es in diesem Fall wiederum zweckmäßig ist, den Hohlraum 13 nur auf der Außenseite 102 der Krümmung K anzuordnen, wobei die der Außenseite 102 die von einem Krümmungsmittelpunkt 100 der Krümmung K abgekehrte Seite der Krümmung K ist.

Ein Hohlraum 13 kann im Mantel hermetisch abgeschlossen sein oder eine Öffnung nach außen aufweisen. In der Figur 2 ist beispielsweise und ohne Beschränkung der Allgemeinheit der Hohlraum 13 links des Kerns 11 als offen, der Hohlraum 13 rechts des Kerns 11 dagegen hermetisch abgeschlossen dargestellt, wobei der offene Hohlraum 13 beispielsweise eine Öffnung 132 in der das Ende 111 des Kerns 11 enthaltenden Stirnfläche 110 des Wellenleiters 1 aufweist. Ein hermetischer Verschluß eines Hohlraums 13 verhindert eine Verschlechterung durch Alterungseffekte.

In einem Hohlraum 13 kann sich Vakuum oder vorzugsweise ein Fluid 130 (siehe Figur 4) befinden. Da die Hohlräume 13 zur effektiven Erniedrigung der durch das feste Material des Mantels 12 vorgegebenen Brechzahl n2 dienen, ist darauf zu achten, daß ein Fluid 130 eine im Vergleich zur Brechzahl n2 niedrigere Brechzahl n3 aufweist.

Das Fluid 130 kann ein aktives Medium, beispielsweise ein optisch nichtlineares Fluid sein wodurch sich mit dem erfindungsgemäßen Wellenleiter 1 ein optischer Schalter realisieren läßt. Das Fluid 130 kann auch ein spektral photometrisch zu analysierendes Fluid sein, wodurch sich ein erfindungsgemäßer Wellenleiter 1 für spektral photometrische Analysen eignet, wobei der lange optische Weg im evaneszenten Feld des Wellenleiters 1 eine hohe Nachweisempfindlichkeit erlaubt.

Das Ausführungsbeispiel nach Figur 4 unterscheidet sich von den Beispielen nach den Figuren 1 bis 3 dadurch, daß gegenüber allen vier Rechteckseiten 113, 114, 115 und 116 des Umfangs 110 des Kerns 11 je ein Hohlraum 13 angeordnet ist, so daß der Kern 11 von vier Hohlräumen 13 umgeben ist.

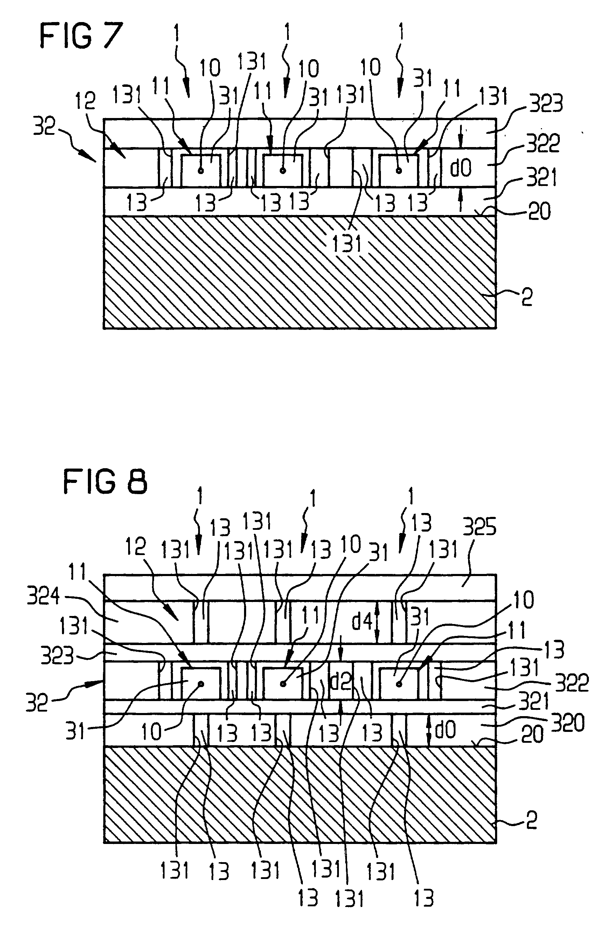

Zur Herstellung eines planaren Wellenleiters 1 nach den Figuren 1 bis 4 ist es vorteilhaft, wenn dieser planare Wellenleiter 1 wie in der Figur 7 und/oder 8 dargestellt ausgebildet ist, d.h. so, daß eine streifenartige Schicht 31, die sich längs der zur Oberfläche 20 parallelen Achse 10 erstreckt, den Kern 11 des Wellenleiters 1 bildet und aus einem die Brechzahl n1 des Kerns 11 aufweisenden Material besteht, in einem Schichtenstapel 32 eingebettet ist, der den Mantel 12 des Wellenleiters 1 bildet und aus mehreren Schichten aus je einem eine Brechzahl n2 des Mantels 12 aufweisenden festen Material besteht.

Bei den Beispielen nach den Figuren 7 und 8 liegt die vorteilhafte Besonderheit vor, daß nicht nur eine einen Kern 11 bildende streifenartige Schicht 31, sondern deren mehrere, beispielsweise drei zueinander parallele streifenartige Schichten 31, diejeweils einen Kern 11 bilden, in dem Schichtenstapel 32 eingebettet sind, der den Mantel 12 bildet. Es sind auf diese Weise drei Wellenleiter 1 auf der Oberfläche 20 des Substrats 2 realisiert, deren Kerne 11 von einem gemeinsamen Mantel 12 umgeben sind.

Bei dem Beispiel nach Figur 7 besteht der den gemeinsamen Mantel 12 bildende Schichtenstapel 32 aus den Schichten 321, 322 und 323, bei dem Beispiel nach Figur 8 aus den Schichten 320 bis 325.

Die Brechzahl n2 der verschiedenen Schichten 321 bis 323 bzw. 320 bis 325 des Schichtenstapels 32 kann differieren, wichtig ist dann nur, daß die maximale Brechzahl n2 dieser Schichten 321 bis 323 bzw. 320 bis 325 kleiner als die Brechzahl n1 eines Kerns 11 ist.

Wesentlich ist, daß zumindest eine der Schichten 321 bis 323 bzw. 320 bis 325 des Schichtenstapels 32 eine Aussparungsschicht ist, in der wenigstens eine einen Hohlraum 13 definierende Aussparung 131 ausgebildet ist, die von einer auf der von der Oberfläche 20 des Substrats 2 abgekehrten Seite auf die Aussparungsschicht aufgebrachten weiteren Schicht des Schichtenstapels 32 abgedeckt ist und dadurch einen erfindungsgemäßen Hohlraum 13 bildet.

Beim Beispiel nach Figur 7 ist im Schichtenstapel 32 nur die Schicht 322 eine Aussparungsschicht, in der Aussparungen 131 ausgebildet sind, die von der auf der von der Oberfläche 20 des Substrats 2 abgekehrten Seite auf die Aussparungsschicht 322 aufgebrachten Schicht 323 abgedeckt sind und jeweils einen Hohlraum 13 definieren. Dabei ist es speziell so eingerichtet, daß in der Aussparungsschicht 322 pro streifenartiger Schicht 31 jeweils zwei dieser streifenartigen Schicht 31 allein zugeordnete Aussparungen 131 ausgebildet sind. Auf diese Weise ist jeder Wellenleiter 1 nach Figur 7 ein Wellenleiter 1 nach den Figuren 1 und 2, bei dem zwei Hohlräume 13 über dem Umfang 110 des Kerns 11 verteilt sind.

Beim Beispiel nach Figur 8 liegen mit den Schichten 320, 322 und 324 des Schichtenstapels 32 drei voneinander getrennte Aussparungsschichten vor, in denen jeweils Aussparungen 131 ausgebildet sind. Die Aussparungen 131 der Aussparungsschicht 320 sind von der Schicht 321 abgedeckt, die auf der von der Oberfläche 20 des Substrats 2 abgekehrten Seite auf diese Aussparungsschicht 320 aufgebracht ist, und jede dieser Aussparungen 131 bildet je einen erfindungsgemäßen Hohlraum 13. Entsprechend sind die Aussparungen 131 der Aussparungsschichten 322 und 324 durch die Schicht 323 bzw. 325 abgedeckt und jede dieser Aussparungen 131 bildet ebenfalls je einen erfindungsgemäße Hohlraum 13.

Dabei ist es speziell so eingerichtet, daß in der Aussparungsschicht 320 unter jeder streifenartigen Schicht 31 je eine Aussparung 131 und in der Aussparunsschicht 324 über jeder streifenartigen Schicht 31 je eine Aussparung 131 ausgebildet ist, und daß wie beim Beispiel nach Figur 7 in der Aussparungsschicht 322 pro streifenartiger Schicht 31 jeweils zwei dieser streifenartigen Schicht 31 allein zugeordnete Aussparungen 131 ausgebildet sind, die auf beiden Seiten dieser streifenartigen Schicht 31 angeordnet sind. Auf diese Weise ist jeder Wellenleiter 1 nach Figur 8 je ein Wellenleiter nach Figur 4, bei dem im Mantel 12 vier Hohlräume 13 über dem Umfang 110 des Kerns 11 verteilt sind.

Ausführungsformen, bei denen drei Hohlräume 13 über dem Umfang 110 des Kerns 11 verteilt sind, können beispielsweise in bezug auf das Beispiel nach Figur 8 dadurch erhalten werden, daß z.B. entweder die Schicht 320 oder die Schicht 324 fortgelassen ist oder keine Aussparungen 131 aufweist. Eine vom Beispiel nach den Figuren 1 und 2 verschiedene Ausführungsform, bei der zwei Hohlräume 13 über dem Umfang 110 des Kerns 11 verteilt sind, kann dadurch erhalten werden, daß bei dem Beispiel nach Figur 8 die Schicht 322 keine Aussparungen 131 aufweist.

Andere Verteilungen von Hohlräumen 13 über dem Ummfang 110 eines Kerns 11 können durch eine andere Zahl und/oder Anordnung von Aussparungsschichten und/oder eine andere Zuordnung von Hohlräumen 13 zu diesem Kern 11 erhalten werden.

Insbesondere im Hinblick auf eine nachfolgend beschriebene Art der Herstellung eines erfindungsgemäßen Wellenleiters 1 ist es umso günstiger, je tiefer in einer Aussparungsschicht die einen Hohlraum 13 definierende Aussparung 131 ist. Zweckmäßigerweise erstreckt sich die einen Hohlraum 13 definierende Aussparung 131 über die ganze Dicke der betreffenden Aussparungsschicht, d.h. über die Dicke d0 der Aussparungsschicht 320, die Dicke d2 der Aussparungsschicht 322 bzw. die Dicke d4 der Aussparungsschicht 324.

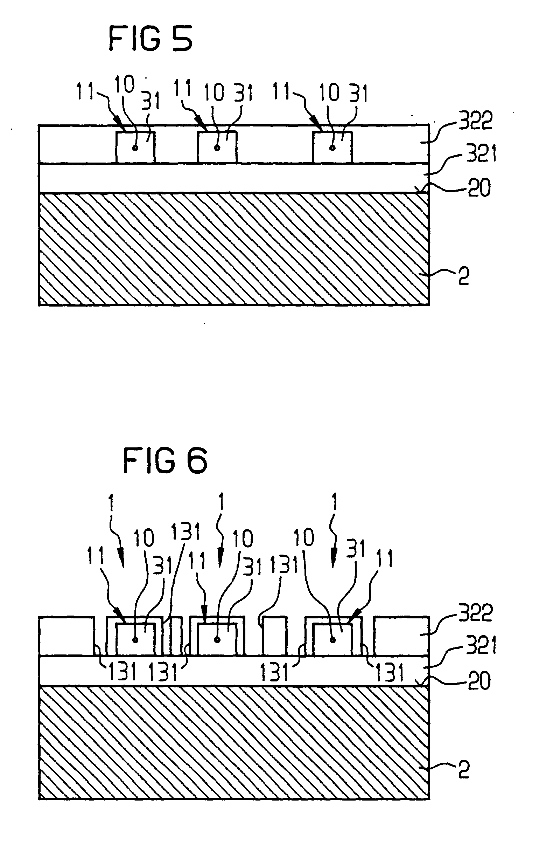

Ein vorteilhaftes Verfahren zur Herstellung des Beispiels nach Figur 7 sei anhand der Figuren 5 bis 7 näher erläutert. Dieses Verfahren beginnt mit der in Figur 5 dargestellten Ausgangsstufe.

Zur Herstellung der Ausgangsstufe nach Figur 5 wird auf der Oberfläche 20 des Substrats 2 als erstes die Schicht 321 aufgebracht, auf der wiederum eine Schicht aus dem Material des Kerns 11 aufgebracht wird. Diese Schicht wird, beispielsweise mittels eines herkömmlichen Lithographieverfahrens, so strukturiert, daß daraus die dargestellten, voneinander getrennten streifenartigen Schichten 31 entstehen, deren jede einen Kern 11 definiert und je eine zur Oberfläche 20 des Substrats 2 parallele und die Längsrichtung der streifenartigen Schicht 31 bestimmende Achse 10 aufweist. Auf die entstandenen streifenartigen Schichten 31 und die zwischen diesen Schichten 31 freiliegende Schicht 321 wird die Schicht 322 so aufgebracht, daß die streifenartigen Schichten 31 vollständig abgedeckt sind.

Die Schicht 322 ist Aussparungsschicht, in welcher Hohlräume 13 definierende Aussparungen 131 derart erzeugt werden, daß jeder streifenartigen Schicht 31 jeweils zwei Aussparungen 131 zugeordnet sind, die auf beiden Seiten dieser zugeordneten streifenartigen Schicht 31 angeordnet sind. Danach ist die in Figur 6 dargestellte Herstellungsstufe entstanden.

Die Aussparungen 131 können durch einen herkömmlichen photolithographischen Prozeß, beispielsweise einen Ätzprozeß hergestellt werden.

Auf die die Aussparungen 131 aufweisende Aussparungsschicht 322 wird abschließend eine Schicht 323 so aufgebracht, daß die Aussparungen 131 zwar abgedeckt sind, eine Aussparung 131 jedoch nicht vollständig mit Schichtmaterial ausgefüllt ist, sondern in dieser Aussparung 131 ein Hohlraum 13 unter der abdeckenden Schicht 323 bestehen bleibt.

Ähnlich wird bei der Herstellung des Beispiels nach Figur 8 vorgegangen. Hier wird auf die Oberfläche 20 des Substrats 2 zunächst die Aussparungsschicht 320 aufgebracht, in welcher nach dem Aufbringen Aussparungen 131 hergestellt werden, deren jede je einem später zu erzeugenden Kern 11 derart zugeordnet ist, daß dieser Kern 11 über der ihm zugeordneten Aussparung 131 in der Aussparungsschicht 320 angeordnet ist.

Auf die Aussparungsschicht 320 wird die Schicht 321 derart aufgebracht, daß zwar die Aussparungen 131 in der Aussparungsschicht 320 abgedeckt, eine Aussparung 131 jedoch nicht vollständig mit Schichtmaterial dieser Schicht 321 ausgefüllt ist, sondern in jeder Aussparung 131 ein Hohlraum 13 unter dieser Schicht 321 bestehen bleibt.

Nach dem Aufbringen der Schicht 321 wird die aus der Figur 7 hervorgehende, aus den Schichten 321, 322 und den zwischen diesen Schichten 321 und 322 eingebetteten streifenartigen Schichten 31 bestehende Schichtstruktur, bei der der Schicht 322 Aussparungsschicht ist, welche die Aussparungen 131 genauso wie beim Beispiel nach Figur 7 aufweist, wie oben beschrieben erzeugt.

Auf der Schicht 322 dieser Schichtstruktur ist die Schicht 323 derart aufgebracht, daß zwar die Aussparungen 131 in der Aussparungsschicht 322 abgedeckt sind, eine Aussparung 131 jedoch nicht vollständig mit Schichtmaterial dieser Schicht 323 ausgefüllt ist, sondern in jeder Aussparung 131 ein Hohlraum 13 unter dieser Schicht 323 bestehen bleibt.

Auf der abdeckenden Schicht 323 wird eine weitere Aussparungsschicht 324 aufgebracht, in der über jeder streifenartigen Schicht 31 je eine dieser streifenartigen Schicht 31 zugeordnete Aussparung 131 erzeugt wird. Nach Herstellung der Aussparungen 131 in der weiteren Aussparungsschicht 324 wird auf diese Aussparungsschicht 324 eine Schicht 325 derart aufgebracht, daß zwar die Aussparungen 131 in der Aussparungsschicht 324 abgedeckt sind, eine Aussparung 131 jedoch nicht vollständig mit Schichtmaterial dieser Schicht 325 ausgefüllt ist, sondern in jeder Aussparung 131 ein Hohlraum 13 unter dieser Schicht 325 bestehen bleibt.

Danach liegt das in Figur 8 dargestellte Endprodukt vor.

Zum Aufbringen einer Schicht auf einer eine Aussparung 131 aufweisenden Aussparungsschicht derart, daß die Aussparung 131 in der Aussparungsschicht abgedeckt wird, aber in der Aussparung 131 ein Hohlraum 13 unter der abdeckenden Schicht bestehen bleibt, wird die abdeckende Schicht, beispielsweise die Schicht 321, 323 bzw. 325, vorteilhafterweise aus einer in Figur 6 angedeuteten Gasphase 5 auf der Aussparungsschicht, im Beispiel der Schicht 320, 322 bzw. 324, abgeschieden. Durch ein solches Verfahren kann gewährleistet werden, daß eine Aussparung 131 nicht mit dem Schichtmaterial der auf der betreffenden Aussparungsschicht abzuscheidenden Schicht zugesetzt wird.

Zweckmäßigerweise werden nicht nur die auf den Aussparungsschichten abzuscheidenden Schichten, sondern wird jede Schicht des Schichtenstapels 32 aus einer Gasphase 5 abgeschieden.

Besonders vorteilhaft ist es, wenn eine aus einer Gasphase 5 abzuscheidende Schicht des Schichtenstapels 32 mittels Flammenhydrolyse abgeschieden wird. Die Flammenhydrolyse hat sich bei einem in der am gleichen Tag eingereichten Anmeldung mit dem amtlichen Aktenzeichen ..... (GR 96 P 2173 DE) beschriebenen Verfahren zur Herstellung einer Kapillare als besonders wirksam erwiesen, bei welchem eine in einer Oberfläche ausgebildete und die Kapillare definierende Nut mit einer Schicht derart abgedeckt wird, daß ein die Kapillare bildender Hohlraum in der Nut unter der abdeckenden Schicht bestehen bleibt. Das dort in bezug auf die Nut beschriebene gilt in gleicher Weise bei den hier beschriebenen Aussparungen 131, so daß das in der Anmeldung .... (GR 96 P 2173 DE) beschriebene Verfahren in gleicher Weise auch bei dem hier beschriebenen Verfahren angewendet werden kann. Wie dort können auch hier Aussparungen 131 einer Breite von 2 bis 100 µm überdeckt werden.

Einsprechend ist es vorteilaft, für jede mittels Flammenhydrolyse oder sonst aus einer Gasphase abzuscheidende Schicht des Schichtenstapels 32 ein Material auf der Basis von SiO₂, das vorzugsweise zu mehr als 60 mol% aus SiO₂ besteht, zu verwenden, vorzugsweise ein Material auf der Basis von SiO₂, das mit zumindestens einem Stoff aus der Stoffgruppe B₂O₃, P₂O₅, GeO₂, Al₂O₃, Ga₂O₃, TiO₂, ZrO₂, ZnO, MgO, As₂O₃, Sb₂O₅, Bi₂O₃ und/oder SnO₂ dotiert ist. Solche Schichten werden als pöröse Schichten abgeschieden. Weist eine solche abgeschiedene Schicht eine hinreichende Dicke von beispielsweise mehr als 10 µm sowie hohe Gasviskosität auf, so läßt sie sich bei vorsichtige Beheizung bei einer Temperatur von über 900°C nach der Abscheidung so zum klaren Glas sintern, daß überdeckte Aussparungen 131 nicht aufgefüllt werden, wobei tiefere Aussparungen 131 günstiger sind als weniger tiefe. Auch ist es günstig, eine Schicht durch einen Partikelstrom aus der Gasphase 5 abzuscheiden, der vorzugsweise unter einem flachen Winkel von beispielsweise 25° bis 30° zur Oberfläche 20 des Substrats 2 gerichtet ist.

Bei Schichten des Schichtenstapels 32 aus Material auf der Basis von SiO₂ besteht das Substrat 2 vorteilhafterweise aus Si, Al₂O₃ und/oder einem Material auf der Basis von SiO₂, da diese Materialien thermomechanisch mit dem Material des Schichtenstapels 32 verträglich sind.

## Patentansprüche

1. Optischer Wellenleiter (1) zum Führen einer optischen Strahlung längs einer Achse (10), bestehend aus
- einem sich längs der Achse (10) erstreckenden wellenleitenden Kern (11) aus einem eine bestimmten Brechzahl (n1) aufweisenden Material und
- einem sich längs der Achse (10) erstreckenden und den Kern (11) umgebenden Mantel (12) aus einem eine bestimmte relativ zur Brechzahl (n1) des Kerns (11) kleinere Brechzahl (n2) aufweisenden festen Material,
wobei im festen Material des Mantels (12) zumindest ein Hohlraum (13) ausgebildet ist,
**dadurch gekennzeichnet, dass** der Wellenleiter durch einen auf der Oberfläche (20) eines Substrats (2) integrierten planaren Wellenleiter (1) gebildet ist und
- eine sich längs einer zur Oberfläche (20) parallelen Achse (10) erstreckende und den Kern (11) des Wellenleiters (1) definierende streifenartige Schicht (31) aus einem die Brechzahl (n1) des Kerns (11) aufweisenden festen Material
- in einem den Mantel (12) des Wellenleiters (1) definierenden und aus zwei oder mehreren längs der Achse (10) sich erstreckenden Schichten (321, 322, 323; 320, 321, 322, 323, 324, 325) aus je einem eine Brechzahl (n2) des Mantels (12) aufweisenden festen Material bestehenden Schichtenstapel (32) eingebettet ist, wobei
- zumindest eine Schicht (322; 320, 322, 324) des Schichtenstapels (32), an die auf der von der Oberfläche (20) des Substrats (2) abgekehrten Seite eine weitere Schicht (323; 321, 323, 325) des Schichtenstapels (32) grenzt, eine Aussparungsschicht ist, in der wenigstens eine einen Hohlraum (13) definierende Aussparung (131) ausgebildet ist.

2. Wellenleiter nach Anspruch 1, **dadurch gekennzeichnet, daß** der Hohlraum (13) in einem zur Achse (10) radialen Abstand (a) vom Kern (11) angeordnet ist.

3. Wellenleiter nach Anspruch 1 oder 2, **dadurch gekennzeichnet, daß** sich der Hohlraum (13) längs der Achse (10) nur über einen Bruchteil (l/z) der axialen Länge (l) des Kerns (11) erstreckt.

4. Wellenleiter nach einem der vorhergehenden Ansprüche, daß über dem die Achse (10) umgebenden Umfang (110) des Kerns (11) zwei oder mehrere Hohlräume (13) verteilt sind.

5. Wellenleiter nach einem der vorhergehenden Ansprüche, insbesondere nach Anspruch 4, **dadurch gekennzeichnet, daß** zumindest ein Hohlraum (13) an einem axialen Ende (111) des Kerns (11) angeordnet ist.

6. Wellenleiter nach einem der vorhergehenden Ansprüche, **dadurch gekennzeichnet, daß** die Achse (10) und der Kern (11) eine Krümmung (K) aufweisen und im Bereich der Krümmung (K) ein Hohlraum (13) nur auf der Außenseite (102) der Krümmung (K) im Mantel (12) angeordnet ist.

7. Wellenleiter nach einem der vorhergehenden Ansprüche, **dadurch gekennzeichnet, daß** zumindest ein Hohlraum (13) mit einem optisch aktives Medium (130) gefüllt oder füllbar ist.

8. Wellenleiter nach einem der vorhergehenden Ansprüche, **dadurch gekennzeichnet, daß** zumindest ein Hohlraum (13) mit einem spektralphotometrisch analysierbaren Fluid (130) füllbar ist.

9. Wellenleiter nach einem der vorhergehenden Ansprüche, **dadurch gekennzeichnet, daß** zumindest ein Hohlraum (13) hermetisch abgeschlossen ist.

10. Wellenleiter nach einem vorangehenden Ansprüche, **dadurch gekennzeichnet, daß** eine Aussparungsschicht, in der eine einen Hohlraum (13) definierende Aussparung (131) ausgebildet ist, eine seitlich an die den Kern (11) definierende streiferiartige Schicht (31) angrenzende Schicht (322) des Schichtenstapels (32) ist.

11. Wellenleiter nach einem der vorangehenden Ansprüche, **dadurch gekennzeichnet, daß** eine Aussparungsschicht, in der eine einen Hohlraum (13) definierende Aussparung (131) ausgebildet ist, eine Schicht (320) des Schichtenstapels (32) ist, die auf einer der Oberfläche (20) des Substrats (2) zugekehrten Seite (113) der den Kern (11) definierenden streifenartigen Schicht (31) angeordnet und von dieser streifenartigen Schicht (31) durch zumindest eine andere Schicht (321) des Schichtenstapels (32) getrennt ist.

12. Wellenleiter nach einem der vorangehenden Ansprüche, **dadurch gekennzeichnet, daß** eine Aussparungsschicht, in der eine einen Hohlraum (13) definierende Aussparung (131) ausgebildet ist, eine Schicht (322) des Schichtenstapels (32) ist, die auf einer der Oberfläche (20) des Substrats (2) abgekehrten Seite (114) der den Kern (11) definierenden streifenartigen Schicht (31) angeordnet und von dieser streifenartigen Schicht (31) durch zumindest eine andere Schicht (323) des Schichtenstapels (32) getrennt ist.

13. Wellenleiter nach einem der vorangehenden Ansprüche, **dadurch gekennzeichnet, daß** sich in einer Aussparungsschicht (322; 320, 322, 324) eine einen Hohlraum (13) definierende Aussparung (131) über eine ganze Dicke (d2; d0, d2, d4) dieser Aussparungsschicht (322; 320, 322, 324) erstreckt.

14. Wellenleiter nach einem der vorangehenden Ansprüche, **dadurch gekennzeichnet, daß** zumindest eine Schicht (320, 321, 31, 322, 323, 324, 325) des Wellenleiters (1) aus einem Material auf der Basis von SiO₂ besteht.

15. Wellenleiter nach Anspruch 14, **dadurch gekennzeichnet, daß** das Material auf der Basis von SiO₂ zu mehr als 60 mol% aus SiO₂ besteht.

16. Wellenleiter nach Anspruch 14 oder 15, **dadurch gekennzeichnet, daß** das Material auf der Basis von SiO₂ mit zumindest einem Stoff aus der Stoffgruppe B₂O₃, P₂O₅, GeO₂, Al₂O₃, Ga₂O₃, TiO₂, ZrO₂, ZnO, MgO, As₂O₃, Sb₂O₅, Bi₂O₃ und/oder SnO₂ dotiert ist.

17. Verfahren zur Herstellung eines Wellenleiters nach einem der vorangehenden Anspruche, **dadurch gekennzeichnet, daß** auf der Oberfläche (20) des Substrats (2) zunächst der Wellenleiter (1) nur bis zu einer zur Ausbildung einer einen Hohlraum (13) definierenden Aussparung (131) vorgesehenen Aussparungsschicht (322; 320, 322, 323) des Schichtenstapels (32) hergestellt wird, daß in dieser Aussparungsschicht (322; 320) die Aussparung (131) erzeugt wird, und daß danach auf der Aussparungsschicht (322; 320) die eine oder mehreren restlichen Schichten (323; 321, 31, 322, 323, 324) des Wellenleiters (1) derart aufgebracht werden, daß die Aussparung (131) in der Aussparungsschicht (322; 320, 322, 324) abgedeckt wird, aber in der Aussparung (131) ein Hohlraum (13) bestehen bleibt.

18. Verfahren nach Anspruch 17 zur Herstellung eines Wellenleiters nach einem der vorangehenden Ansprüche, dessen Schichtenstapel (32) zwei oder mehrere verschiedene Aussparungsschichten (320, 322, 324) mit jeweils einer einen Hohlraum (13) definierenden Aussparung (131) aufweist, **dadurch gekennzeichnet, daß** der Wellenleiter (1) nach der Erzeugung bis einschließlich zu einer der Oberfläche (20) am nächsten liegenden, zur Ausbildung einer einen Hohlraum (13) definierenden Aussparung (131) vorgesehenen Aussparungsschicht (320) des Schichtenstapels (32) schrittweise von einer zur Ausbildung einer einen Hohlraum (13) definierenden Aussparung (131) vorgesehenen Aussparungsschicht (320, 322) bis einschließlich zur nächstfolgenden, zur Ausbildung einer einen Hohlraum (13) definierenden Aussparung (131) vorgesehenen Aussparungsschicht (322, 323) des Schichtenstapels (32) derart hergestellt wird, daß in jeder erzeugten Aussparungsschicht (320, 322, 323) jeweils die einen Hohlraum (13) definierende Aussparung (131) erzeugt wird und danach auf dieser erzeugten Aussparungsschicht (320, 322) die eine oder mehreren weiteren Schichten (321, 31, 322; 323) des Wellenleiters (1) bis einschließlich der nächstfolgenden Aussparungsschicht (322, 323) derart aufgebracht werden, daß die Aussparung (131) in der erzeugten einen Aussparungsschicht () von den aufgebrachten Schichten () abgedeckt wird, aber in dieser Aussparung (131) ein Hohlraum (13) bestehen bleibt, wobei nach der Erzeugung der einen Hohlraum (13) definierenden Aussparung (131) in der von der Oberfläche (20) am weitesten entfernten letzten Aussparungsschicht (323) die eine oder mehreren restlichen Schichten (324) des Wellenleiters (1) derart aufgebracht werden, daß die Aussparung (131) in dieser letzten Aussparungsschicht (131) abgedeckt wird, aber in dieser Aussparung (131) ein Hohlraum (13) bestehen bleibt

19. Verfahren nach einem der Ansprüche 17 bis 18, **dadurch gekennzeichnet, daß** zum Aufbringen einer Schicht (321, 323, 325) auf einer eine Aussparung (131) aufweisenden Aussparungsschicht (320, 322, 324) derart, daß die Aussparung (131) in der Aussparungsschicht (320, 322, 324) abgedeckt wird, aber in der Aussparung (131) ein Hohlraum (13) bestehen bleibt, die abdeckende Schicht (321, 323, 325) aus einer Gasphase (5) auf der Aussparungsschicht (320, 322, 324) abgeschieden wird.

20. Verfahren nach Anspruch 18, **dadurch gekennzeichnet, daß** jede Schicht (320, 321, 31, 322, 323, 324, 325) des Schichtenstapels (32) aus einer Gasphase (5) abgeschieden wird.

21. Verfahren nach Anspruch 19, oder 20, **dadurch gekennzeichnet, daß** eine aus einer Gasphase (5) abzuscheidende Schicht (320, 321, 31, 322, 323, 324, 325) des Schichtenstapels (32) mittels Flammenhydrolyse abgeschieden wird.

## Claims

1. Optical waveguide (1) for guiding an optical radiation along an axis (10), comprising
- a waveguiding core (11) which extends along an axis (10) and is made from a material having a specific refractive index (n1), and
- a cladding (12) which extends along the axis (10) and surrounds the core (11) and is made from a solid material having a specific refractive index (n2) which is smaller in relation to the refractive index (n1) of the core (n) ,
at least one cavity (13) being formed in the solid material of the cladding (12),
**characterized in that** the waveguide is formed by a planar waveguide (1) integrated on the surface (20) of a substrate (2), and
- a strip-like layer (31) which extends along an axis (10) parallel to the surface (20) and defines the core (11) of the waveguide (1) and is made from a solid material having the refractive index (n1) of the core (11),
- is embedded in a layer stack (32) which defines the cladding (12) of the waveguide (1) and comprises two or more layers (321, 322, 323; 320, 321, 322, 323, 324, 325) extending along the axis (10) and made in each case from a solid material having a refractive index (n2) of the cladding (12),
- at least one layer (322; 320, 322, 324) of the layer stack (32), which is bordered on the side averted from the surface (20) of the substrate (2) by a further layer (323; 321, 323, 325) of the layer stack (32), being a cut-out layer in which at least one cut-out (131) defining a cavity (13) is formed.

2. Waveguide according to Claim 1, **characterized in that** the cavity (13) is arranged at a distance (a) from the core (11) which is radial relative to the axis (10).

3. Waveguide according to Claim 1 or 2, **characterized in that** the cavity (13) extends along the axis (10) only over a fraction (l/z) of the axial length (1) of the core (11).

4. Waveguide according to one of the preceding claims, **characterized in that** two or more cavities (13) are distributed over the circumference (110), surrounding the axis (10), of the core (11).

5. Waveguide according to one of the preceding claims, in particular according to Claim 4, **characterized in that** at least one cavity (13) is arranged at an axial end (111) of the core (11).

6. Waveguide according to one of the preceding claims, **characterized in that** the axis (10) and the core (11) have a curvature (K), and in the region of the curvature (K) a cavity (13) is arranged in the cladding (12) only on the outer side (102) of the curvature (K).

7. Waveguide according to one of the preceding claims, **characterized in that** at least one cavity (13) is filled, or can be filled, with an optically active medium (130).

8. Waveguide according to one of the preceding claims, **characterized in that** at least one cavity (13) can be filled with a fluid (130) which can be analysed by spectral photometry.

9. Waveguide according to one of the preceding claims, **characterized in that** at least one cavity (13) is hermetically sealed.

10. Waveguide according to one of the preceding claims, **characterized in that** a cut-out layer in which a cut-out (131) defining a cavity (13) is formed is a layer (322) of the layer stack (32) bordering the side of the strip-like layer (31) defining the core (11).

11. Waveguide according to one of the preceding claims, **characterized in that** a cut-out layer in which a cut-out (131) defining a cavity (13) is formed is a layer (320) of the layer stack (32) which is arranged on a side (113), facing the surface (20) of the substrate (2), of the strip-like layer (31) defining the core (11), and is separated from this strip-like layer (31) by at least one other layer (321) of the layer stack (32).

12. Waveguide according to one of the preceding claims, **characterized in that** a cut-out layer in which a cut-out (131) defining a cavity (13) is formed is a layer (322) of the layer stack (32) which is arranged on a side (114), averted from the surface (20) of the substrate (2), of the strip-like layer (31) defining the core (11), and is separated from this strip-like layer (31) by at least one other layer (323) of the layer stack (32).

13. Waveguide according to one of the preceding claims, **characterized in that** in one cut-out layer (322; 320, 322, 324), a cut-out (131) defining a cavity (13) extends over an entire thickness (d2; d0, d2, d4) of this cut-out layer (322; 320, 322, 324).

14. Waveguide according to one of the preceding claims, **characterized in that** at least one layer (320, 321, 31, 322, 323, 324) of the waveguide (1) consists of a material based on SiO₂.

15. Waveguide according to Claim 14, **characterized in that** the material based on SiO₂ consists of more than 60 mol% of SiO₂.

16. Waveguide according to Claim 14 or 15, **characterized in that** the material based on SiO₂ is doped with at least one substance, from the substance group of B₂O₃, P₂O₅, GeO₂, Al₂O₃, Ga₂O₃, TiO₂, ZrO₂, ZnO, MgO, As₂O₃, Sb₂O₅, Bi₂O₃, and/or SnO₂.

17. Method for producing a waveguide according one of the preceding claims, **characterized in that**, the waveguide (1) is firstly produced on the surface (20) of the substrate (2) only up to a cut-out layer (322; 320, 322, 323) of the layer stack (32) which is provided for forming a cut-out (131) defining a cavity (13), **in that** the cut-out (131) is produced in this cut-out layer (322; 320), and **in that** thereafter the one or more remaining layers (323; 321, 31, 322, 323, 324) of the waveguide (1) are applied to the cut-out layer (322; 320) in such a way that the cut-out (131) is covered in the cut-out layer (322; 320, 322, 324), but a cavity (13) persists in the cut-out (131).

18. Method according to Claim 17 for producing a waveguide according to one of the preceding claims, whose layer stack (32) has two or more different cut-out layers (320, 322, 324) each having a cut-out (131) defining a cavity (13), **characterized in that**, after being produced up to and including a cut-out layer (320), lying closest to the surface (20) and provided for forming a cut-out (131) defining a cavity (13), of the layer stack (32), the waveguide (1) is produced in steps from a cut-out layer (320, 322) provided for forming a cut-out (131) defining a cavity (13) up to and including the next cut-out layer (322, 323), provided for forming a cut-out (131) defining a cavity (13), of the layer stack (32), this being done in such a way that the cut-out (131) defining a cavity (13) is respectively produced in each cut-out layer (320, 322, 323) produced, and thereafter the one or more further layers (321, 31, 322; 323) of the waveguide (1) are applied to this cut-out layer (320, 322) produced up to and including the next cut-out layer (322, 323) in such a way that the cut-out (131) in one cut-out layer () produced is covered by the applied layers () but a cavity (13) persists in this cut-out (131), after the production of the cut-out (131), defining a cavity (13), in the cut-out layer (323) most remote from the surface (20) the one or more remaining layers (324) of the waveguide (1) being applied in such a way that the cut-out (131) in this last cut-out layer (131) is covered, but a cavity (13) persists in this cut-out (131).

19. Method according to one of Claims 17 to 18, **characterized in that** in order to apply a layer (321, 323, 325) to a cut-out layer (320, 322, 324) having a cut-out (131) in such a way that the cut-out (131) in the cut-out layer (320, 322, 324) is covered but a cavity (13) persists in the cut-out (131), the covering layer (321, 323, 325) is deposited from a gas phase (5) onto the cut-out layer (320, 322, 324).

20. Method according to Claim 18, **characterized in that** each layer (320, 321, 31, 322, 323, 324, 325) of the layer stack (32) is deposited from a gas phase (5).

21. Method according to Claim 19 or 20, **characterized in that** one layer (320, 321, 31, 322, 323, 324, 325) of the layer stack (32) which is to be deposited from a gas phase (5) is deposited by means of flame hydrolysis.

## Revendications

1. Guide d'ondes (1) optique pour guider un rayonnement optique le long d'un axe (10) constitué
- d'un coeur (11) de guidage des ondes s'étendant le long de l'axe (10) et en un matériau ayant un certain indice (n1) de réfraction ; et
- d'une gaine (12) s'étendant le long de l'axe (10), entourant le coeur (11) et en un matériau solide ayant un indice de réfraction (n2) plus petit que l'indice (n1) de réfraction du coeur (11),
au moins une cavité (13) étant constituée dans le matériau rigide de la gaine (12),
**caractérisé en ce que** le guide d'ondes est formé par un guide d'ondes (1) planaire intégré à la surface (20) d'un substrat (2) ; et
- une couche (31) en forme de bande s'étendant le long d'un axe (10) parallèle à la surface (20) et définissant le coeur (11) du guide d'ondes (1) en un matériau solide ayant l'indice (n1) de réfraction du coeur (11) ;
- est incorporé dans un empilement (32) de couches définissant la gaine (12) du guide d'ondes (1) et constitué de deux ou de plusieurs couches (321, 322, 323 ; 320, 321, 322, 323, 324, 325) s'étendant le long de l'axe (10) et, respectivement, en un matériau solide ayant un indice (n2) de réfraction de la gaine (12), dans lequel
- au moins une couche (322 ; 320, 322, 324) de la pile (32) de couches voisine du côté éloigné de la surface (20) du substrat (2) d'une autre couche (323 ; 321, 323, 325) de la pile (32) de couches est une couche à évidements dans laquelle est constitué au moins un évidement (131) définissant une cavité (13).

2. Guide d'ondes suivant la revendication 1, **caractérisé en ce que** la cavité (13) est disposée à une distance (a) radiale par rapport à l'axe (10) du coeur (11).

3. Guide d'ondes suivant la revendication 1 ou 2, **caractérisé en ce que** la cavité (13) s'étend le long de l'axe (10) seulement sur une fraction (l/z) de la longueur (I) axiale du coeur (11).

4. Guide d'ondes suivant l'une des revendications précédentes, **caractérisé en ce que** deux ou plusieurs cavités (13) sont réparties sur le pourtour (110) du coeur (11) entourant l'axe (10).

5. Guide d'ondes suivant l'une des revendications précédentes, notamment suivant la revendication 4, **caractérisé en ce qu'**au moins une cavité (13) est disposée à l'extrémité (111) axiale du coeur (11).

6. Guide d'ondes suivant l'une des revendications précédentes, **caractérisé en ce que** l'axe (10) et le coeur (11) ont une courbure (K) et, dans la région de la courbure (K), une cavité (13) n'est disposée que dans la gaine (12) que du côté (102) extérieur de la courbure (K).

7. Guide d'ondes suivant l'une des revendications précédentes, **caractérisé en ce qu'**au moins une cavité (13) est remplie ou peut être remplie d'un milieu (130) actif du point de vue optique.

8. Guide d'ondes suivant l'une des revendications précédentes, **caractérisé en ce qu'**au moins une cavité (13) peut être remplie d'un fluide (130) pouvant être analysé par spectrophotométrie.

9. Guide d'ondes suivant l'une des revendications précédentes, **caractérisé en ce qu'**au moins une cavité (13) est fermée hermétiquement.

10. Guide d'ondes suivant l'une des revendications précédentes, **caractérisé en ce qu'**une couche d'évidements, dans laquelle est constitué un évidement (131) définissant une cavité (13), est une couche (132) de la pile (32) de couches voisine latéralement de la couche (31) en forme de bande définissant le coeur (11).

11. Guide d'ondes suivant l'une des revendications précédentes, **caractérisé en ce qu'**une couche d'évidements, dans laquelle est constitué un évidement (131) définissant une cavité (13), est une couche (320) de la pile (32) de couches qui est disposée sur un côté (113), tourné vers la surface (20) du substrat (2), de la couche (31) en forme de bande définissant le coeur (11) et est séparée de cette couche (31) en forme de bande par au moins une autre couche (321) de la pile (32) de couches.

12. Guide d'ondes suivant l'une des revendications précédentes, **caractérisé en ce qu'**une couche d'évidements, dans laquelle est constitué un évidement (131) définissant une cavité (13), est une couche (322) de la pile (32) de couches qui est disposée d'un côté (114), éloigné de la surface (20) du substrat (2), de la couche (31) en forme de bande définissant le coeur et qui est séparée de cette couche (31) en forme de bande par au moins une autre couche (323) de la pile (32) de couches.

13. Guide d'ondes suivant l'une des revendications précédentes, **caractérisé en ce qu'**un évidement (131) définissant dans une couche (322 ; 320, 322, 324) d'évidements une cavité (13) s'étend sur toute une épaisseur (d2 ; d0, d2, d4) de cette couche (322 ; 320, 322, 324) d'évidements.

14. Guide d'ondes suivant l'une des revendications précédentes, **caractérisé en ce qu'**au moins une couche (320, 321, 31, 322, 323, 324, 325) du guide d'ondes (1) est en un matériau à base de SiO₂.

15. Guide d'ondes suivant la revendication 14, **caractérisé en ce que** le matériau à base de SiO₂ est constitué pour plus de 60 % en mole de SiO₂.

16. Guide d'ondes suivant la revendication 14 ou 15, **caractérisé en ce que** le matériau à base de SiO₂ est dopé par au moins une substance du groupe B₂O₃, P₂O₅, GeO₂, AlO₃, GaO₃, TiO₂, ZrO₂, ZnO, MgO, As₂O₃, Sb₂O₅, Bi₂O₃, et/ou SnO₂.

17. Procédé de production d'un guide d'ondes suivant l'une des revendications précédentes, **caractérisé en ce que** l'on produit à la surface (20) du substrat (2) d'abord le guide d'ondes (1), seulement jusqu'à une couche (322 ; 320, 322, 323) d'évidements de la pile (32) de couches prévue pour la constitution d'un évidement (131) définissant une cavité (13), on produit dans cette couche (322 ; 320) d'évidements l'évidement (131) et ensuite on dépose sur la couche (322 ; 320) d'évidements la ou les plusieurs couches (323 ; 321, 31, 322, 323, 324) restantes du guide d'ondes (1), de façon à recouvrir l'évidement (131) de la couche (322 ; 320, 322, 324) d'évidements, mais à laisser subsister une cavité (13) dans l'évidement (131).

18. Procédé suivant la revendication 17 de production d'un guide d'ondes suivant l'une des revendications précédentes, dont la pile (32) de couches a deux ou plusieurs couches (320, 322, 324) d'évidements différentes ayant, respectivement, un évidement (131) définissant une cavité (13), **caractérisé en ce que** le guide d'ondes (1) est produit jusqu'à y compris une couche (320) d'évidements de la pile (32) de couches se trouvant le plus près de la surface (20) est prévue pour constituer un évidement (131) définissant une cavité (13), pas à pas d'une couche (320, 322) d'évidements prévue pour constituer un évidement (131) définissant une cavité (13) jusqu'à y compris la couche (322, 323) d'évidements de la pile (32) de couches venant immédiatement ensuite et prévue pour constituer un évidement (131) définissant une cavité (13), de façon à produire dans chaque couche (320, 322, 323) d'évidements produite, respectivement, l'évidement (131) définissant une cavité (13) et qu'ensuite il est déposé sur cette couche (320, 322) d'évidements produite la ou les plusieurs autres couches (321, 31, 322 ; 323) du guide d'ondes (1) jusqu'à y compris la couche (322, 323) d'évidements immédiatement suivante, de sorte que l'évidement (131) dans la couche d'évidements produite soit recouvert par les couches déposées, mais qu'il subsiste dans cet évidement (131) une cavité (13) dans lequel, après la production de l'évidement (131) définissant une cavité (13), dans la dernière couche (323) d'évidement, la plus éloignée de la surface (20), on dépose la ou plusieurs couches (324) restantes du guide d'ondes (1), de façon que l'évidement (131) dans cette dernière couche (131) d'évidements soit recouvert, mais qu'il subsiste dans cet évidement (131) une cavité (13).

19. Procédé suivant l'une des revendications 17 à 18, **caractérisé en ce que** pour le dépôt d'une couche (321, 323, 325) sur une couche (320, 322, 324) d'évidements ayant un évidement (131), de façon que l'évidement (131) soit recouvert dans la couche (320, 322, 324) d'évidements, mais qu'il reste dans l'évidement (131) une cavité (13), on dépose les couches (321, 323, 325) de recouvrement en phase (5) gazeuse sur la couche (320, 322, 324) d'évidements.

20. Procédé suivant la revendication 18, **caractérisé en ce que** l'on dépose chaque couche (320, 321, 31, 322, 323, 324, 325) de la pile (32) de couches en phase (5) gazeuse.

21. Procédé suivant la revendication 19 ou 20, **caractérisé en ce que** l'on dépose une couche (320, 321, 31, 322, 323, 324, 325) à déposer en phase (5) gazeuse de la pile (32) de couches au moyen d'une hydrolyse à la flamme.
